Europäisches Patentamt

European Patent Office

Office européen des brevets

(19)

(11) Numéro de publication: **0 429 362 A1**

## (12) DEMANDE DE BREVET EUROPEEN

(21) Numéro de dépôt: 90403287.7

(22) Date de dépôt: 21.11.90

(51) Int. Cl.5: **F16F 13/00**

(30) Priorité: 24.11.89 FR 8915494

(43) Date de publication de la demande:
29.05.91 Bulletin 91/22

(84) Etats contractants désignés:
DE ES GB IT SE

(71) Demandeur: HUTCHINSON
2 rue Balzac
F-75384 Paris Cédex 08(FR)

(72) Inventeur: Thelamon, Jean
12 Rue du Pont de Boisville
F-28800 Bonneval(FR)
Inventeur: Schwartz, Paul
Foyer Coatel, Boulevard de Péringondas
F-28200 Chateaudun(FR)

(74) Mandataire: Behaghel, Pierre et al
CABINET PLASSERAUD 84 rue d'Amsterdam
F-75009 Paris(FR)

(54) Perfectionnements apportés aux manchons antivibratoires hydrauliques.

(57) Il s'agit d'un manchon antivibratoire hydraulique comprenant deux armatures rigides tubulaires (1,2) s'entourant l'une l'autre et réunies entre elles par un corps en élastomère (3) conformé de façon à former avec celles-ci au moins deux poches étanches (A,B) opposées diamétralement et communiquant entre elles par un canal étroit (9), l'ensemble desdites poches et dudit canal étant rempli d'un liquide amortisseur, la portion du corps en élastomère qui délimite l'une au moins des poches (A) présentant en section axiale la forme générale d'un U ou V ouvert radialement vers l'extérieur et étant adhérée contre deux profilés annulaires rigides (8) dont l'un au moins contient le canal étroit. L'écartement axial mutuel des deux profilés est maintenu à l'aide de bossages (12) formés sur la face intérieure de l'armature tubulaire externe (2).

FIG.1.

## PERFECTIONNEMENTS APPORTÉS AUX MANCHONS ANTIVIBRATOIRES HYDRAULIQUES.

L'invention est relative aux manchons antivibratoires hydrauliques comprenant deux armatures rigides tubulaires s'entourant l'une l'autre et de préférence de révolution au moins en partie, coaxiales et concentriques au moins sous charge, armatures réunies entre elles par un corps en élastomère conformé de façon à former avec celles-ci au moins deux poches étanches opposées diamétralement selon une direction D et communiquant entre elles par un canal étroit, l'ensemble desdites poches et dudit canal étant rempli d'un liquide amortisseur.

De tels manchons sont destinés à être montés entre deux pièces rigides solidarisables respectivement avec les deux armatures et susceptibles de subir l'une par rapport à l'autre des oscillations orientées selon la direction diamétrale D, l'ensemble étant agencé de façon telle que, pour certaines au moins de ces oscillations, le liquide soit refoulé alternativement de l'une des poches vers l'autre et inversement à travers le canal étroit, ce qui crée dans ce liquide, pour une fréquence donnée des oscillations, fréquence dont la valeur F est directement liée aux cotes dudit canal, un phénomène de résonance propre à amortir la transmission de ces oscillations de l'une des armatures à l'autre.

Les manchons du genre en question sont par exemple destinés à être interposés entre, d'une part, un châssis de véhicule et, d'autre part, le moteur à combustion interne ou le train avant ou arrière de ce véhicule.

L'invention concerne plus particulièrement, parmi les manchons ci-dessus, ceux dans lesquels la portion du corps en élastomère qui délimite l'une au moins des poches présente en section axiale la forme générale d'un U ou V ouvert radialement vers l'extérieur et est adhérée contre deux profilés annulaires rigides qui admettent pour axe l'axe de l'armature tubulaire externe et qui sont disposés respectivement à l'intérieur des deux extrémités axiales de cette armature; à proximité de ces extrémités, l'un au moins de ces deux profilés contenant le canal étroit ci-dessus.

De tels manchons ont été décrits dans le brevet EUROPE n° 0 248 714.

Dans les modes de réalisation connus desdits manchons, on maintient en général les deux anneaux écartés axialement l'un de l'autre en disposant axialement entre eux une bague cylindrique, bague qui peut être constituée en deux morceaux s'étendant chacun sur un peu moins d'un demicercle et qui est généralement juxtaposée contre la face intérieure de l'armature tubulaire externe.

Cette bague est relativement coûteuse et pesante.

L'invention a pour objet, surtout, de la supprimer.

A cet effet, les manchons du genre en question selon l'invention sont essentiellement caractérisés en ce que l'écartement axial mutuel des deux profilés annulaires est maintenu à l'aide de bossages faisant partie de l'armature tubulaire externe et faisant saillie sur la face intérieure de cette armature, bossages formés entre les profilés de façon à constituer des butées axiales pour ceux-ci.

Dans des modes de réalisation avantageux, on a recours en outre à l'une et/ou à l'autre des dispositions suivantes :
- les bossages sont constitués par un tronçon de cylindre rétréci faisant partie de l'armature externe, ledit tronçon étant délimité à ses deux extrémités axiales par deux ressauts annulaires qui longent les deux profilés et étant obtenu par un rétreint radial de la portion, de l'armature externe, disposée axialement entre les deux profilés,
- les bossages sont formés par emboutissage de creux dans la face extérieure de l'armature tubulaire externe,
- les creux ci-dessus sont répartis selon deux couronnes admettant pour axe l'axe de l'armature tubulaire externe et longeant chacune l'un des deux profilés,
- les creux ci-dessus constituent des rainures rectilignes s'étendant, parallèlement à l'axe de l'armature tubulaire externe, de l'un des deux profilés à l'autre.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation de l'invention en se référant aux dessins ci-annexés d'une manière bien entendu non limitative.

Les figures 1, 2 et 3, de ces dessins, montrent un manchon antivibratoire hydraulique établi selon l'invention, respectivement en coupe axiale selon I-I figure 2, en coupe transversale selon II-II figure 1 et en vue perspective.

Les figures 4 et 5 montrent en vue perspective respectivement deux variantes d'un tel manchon, également conformes à l'invention.

Le manchon en question comprend :
- une armature métallique tubulaire interne de révolution 1,
- une armature métallique tubulaire externe de révolution 2 qui entoure l'armature 1 et qui, pour l'état monté et chargé du manchon, peut être coaxiale à cette armature 1, les axes des deux armatures étant de toute façon parallèles entre eux au repos du manchon,
- et un corps en élastomère 3 reliant l'une à l'autre les deux armatures 1 et 2 en ménageant entre celles-ci deux poches étanches A,B diamétralement opposées selon une direction D.

L'armature interne 1 est destinée à être solidarisée avec une broche (non représentée) qui la traverse jointivement alors que l'armature externe 2 est destinée à être solidarisée avec un palier (non représenté), cette broche et ce palier étant solidaires respectivement de deux éléments rigides entre lesquels on désire monter un support antivibratoire, éléments tels qu'un moteur de véhicule et que le châssis de ce véhicule.

Une portion du corps 3, qui est supposée ici à titre purement illustratif être sa moitié supérieure, présente sous charge une forme de révolution autour de l'axe commun aux deux armatures 1 et 2 avec une demi-section axiale en forme de U ou de V, deux gorges 4 peu profondes ouvertes axialement vers l'extérieur du manchon étant évidées dans les deux parois frontales 5 de ladite portion.

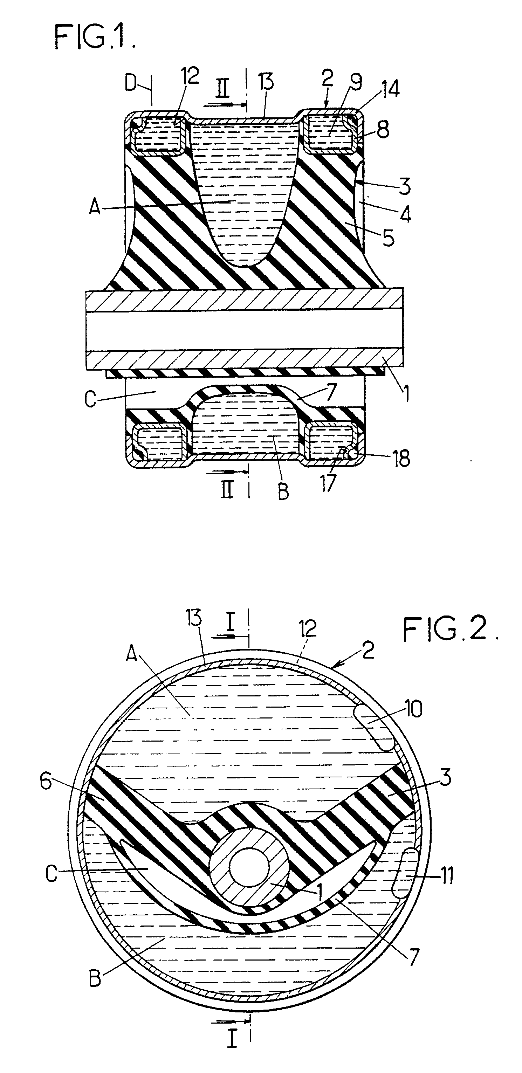

Cette portion comprend également deux bras radiaux 6 diamétralement opposés ou s'étendant selon un V largement ouvert ainsi que visible sur la figure 2, bras qui délimitent avec les parois 5 et l'armature externe 2 la chambre A.

La portion du corps 3 qui délimite la chambre B est constituée par une membrane flexible mince 7.

Cette membrane se présente sous la forme d'un bandeau incurvé en demi-cercle et légèrement bombé vers l'axe. Ce bandeau présente deux bords semi-circulaires reliés de façon étanche à l'armature externe 2 et les deux extrémités dudit bandeau considérées selon la direction circonférentielle sont raccordées aux bras radiaux 6, une poche C ouverte axialement à l'air libre étant ainsi ménagée entre ces bras et la membrane 7.

Les portions, du corps 3 en élastomère, correspondant aux extrémités du U ou V sont adhérées contre deux profilés circulaires 8 présentant une section droite en U ouverte radialement vers l'extérieur.

Ces profilés sont fermés de façon étanche par les extrémités axiales de l'armature tubulaire externe 2 de façon à former deux canaux circulaires étroits 9.

Chacun de ces canaux 9 débouche latéralement par des orifices 10,11 dans respectivement les deux chambres A et B.

Les chambres A et B ainsi que les portions, des canaux 9, reliant ces chambres entre elles, sont remplies d'un liquide.

Pour maintenir axialement écartés l'un de l'autre les deux profilés 8, dans les modes de réalisation connus jusqu'à ce jour, on disposait une bague cylindrique ajourée ou non entre ceux-ci, à l'intérieur de l'armature 2.

Ici, l'on ne prévoit aucune bague et l'écartement axial mutuel des deux profilés 8 est maintenu à l'aide de bossages formés sur la face intérieure de l'armature 2 : par "bossages", on désigne ici des portions de l'armature 2 elle-même faisant saillie vers l'intérieur de celle-ci et obtenus par sa déformation locale.

Dans le premier mode de réalisation illustré sur les figures 1 à 3, les bossages 12 en question s'étendent sur toute la périphérie du manchon et sont obtenus en effectuant un rétreint sur la portion, de l'armature tubulaire externe 2, disposée axialement entre les profilés 8, à l'aide d'un outillage multi-coquilles.

Les bossages ainsi obtenus se présentent alors sous la forme de ressauts 12 juxtaposés axialement contre les deux profilés 8 et raccordant aux deux extrémités axiales non déformées de l'armature 2 un tronçon de tube rétréci 13 constituant la portion centrale de cette armature.

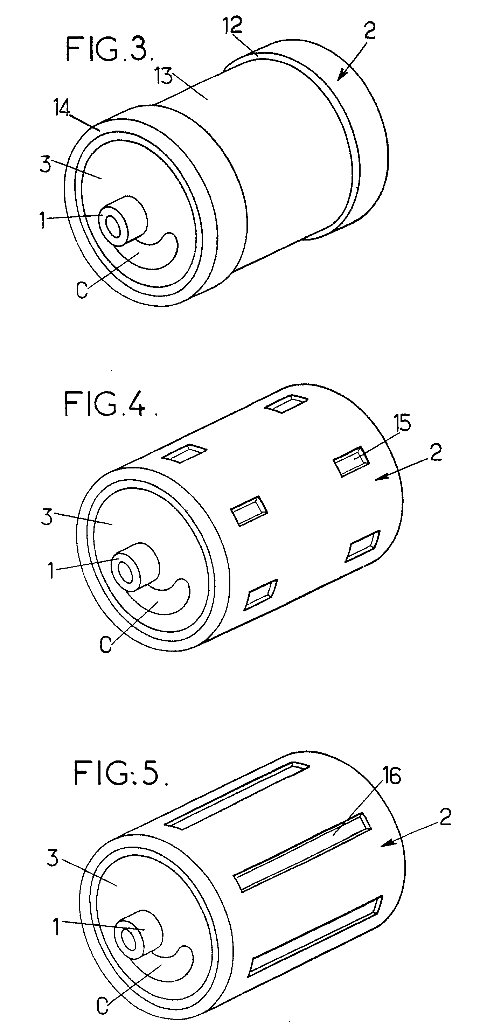

Dans les variantes illustrées sur les figures 4 et 5, les bossages sont constitués par des poinçonnages locaux de la face extérieure de l'armature externe 2, réalisés par matriçage.

Dans le mode de réalisation de la figure 4, ces poinçonnages constituent deux couronnes de creux 15 de forme générale rectangulaire présentant un grand côté parallèle à l'axe du manchon, chacun desdits creux correspondant bien entendu à un bossage faisant saillie sur la face intérieure de l'armature 2, chaque bossage étant juxtaposé axialement à l'un des deux profilés 8.

Dans le mode de réalisation de la figure 5, les bossages sont des nervures s'étendant parallèlement à l'axe du manchon et correspondant à des rainures longitudinales 16 creusées parallèlement les unes aux autres dans la face extérieure de l'armature tubulaire externe 2, tout autour de celle-ci, les extrémités longitudinales desdites nervures étant juxtaposées contre les profilés 8.

On voit encore en 14 sur la figure 1 les bords terminaux de l'armature tubulaire externe 2 qui sont rabattus aux fins de sertissage contre les profilés 8.

Il est à noter que les ailes extérieures de ces profilés présentent un rebord 17 décalé vers l'intérieur et, comme les pourtours desdits profilés sont noyés dans l'élastomère constitutif du corps 3, ce décrochement permet la formation d'un bourrelet annulaire extérieur 18 en élastomère, dont l'écrasement lors du sertissage des bords 14 ci-dessus assure une excellente étanchéité du manchon terminé vis-à-vis du liquide intérieur.

On comprend que, quel que soit le mode de réalisation adopté, la présence des bossages en saillie sur la face intérieure de l'armature tubulaire externe 2 a pour effet de maintenir à une valeur constante l'écartement axial entre les deux profilés 8 : on fait ainsi l'économie de la bague d'écartement qui était utiliséedans les constructions antérieures.

En suite de quoi, et quel que soit le mode de réalisation adopté, on dispose finalement de manchons antivibratoires hydrauliques dont la constitution et les avantages résultent suffisamment de ce qui précède.

Comme il va de soi, et comme il résulte d'ailleurs déjà de ce qui précède, l'invention ne se limite nullement à ceux, de ses modes d'application et de réalisation, qui ont été plus spécialement envisagés ; elle en embrasse, au contraire, toutes les variantes, notamment :
- celles où les profilés annulaires rigides présenteraient une section droite différente de celle explicitée ci-dessus, par exemple à contour fermé, ou encore en forme de U ouvert axialement vers l'extérieur du manchon, cette section étant alors bien entendu refermée par tous moyens désirables pour former les canaux étroits de communication entre les chambres du manchon,
- et celles où la forme des creux emboutis dans la face extérieure de l'armature tubulaire externe et répartis selon deux couronnes serait autre que rectangulaire, par exemple circulaire, chaque creux ayant alors la forme d'une calotte sphérique ou d'une demi-sphère.

**Revendications**

1. Manchon antivibratoire hydraulique comprenant deux armatures rigides tubulaires (1,2) s'entourant l'une l'autre et réunies entre elles par un corps en élastomère (3) conformé de façon à former avec celles-ci au moins deux poches étanches (A,B) opposées diamétralement et communiquant entre elles par un canal étroit (9), l'ensemble desdites poches et dudit canal étant rempli d'un liquide amortisseur, la portion du corps en élastomère qui délimite l'une au moins des poches (A) présentant en section axiale la forme générale d'un U ou V ouvert radialement vers l'extérieur et étant adhérée contre deux profilés annulaires rigides (8) qui admettent pour axe l'axe de l'armature tubulaire externe (2) et qui sont disposés respectivement à l'intérieur des deux extrémités axiales de cette armature, à proximité de ces extrémités, l'un au moins de ces deux profilés contenant le canal étroit ci-dessus, caractérisé en ce que l'écartement axial mutuel des deux profilés annulaires (8) est maintenu à l'aide de bossages (12,15,16) faisant partie de l'armature tubulaire externe (2) et faisant saillie sur la face intérieure de cette armature, bossages formés entre les profilés de façon à constituer des butées axiales pour ceux-ci.

2. Manchon selon la revendication 1, caractérisé en ce que les bossages sont constitués par un tronçon de cylindre rétréci (13) faisant partie de l'armature externe (2), ledit tronçon étant délimité à ses deux extrémités axiales par deux ressauts annulaires (12) qui longent les deux profilés (8) et étant obtenu par un rétreint radial de la portion, de l'armature externe, disposée axialement entre les deux profilés.

3. Manchon selon la revendication 1, caractérisé en ce que les bossages sont formés par emboutissage de creux (15, i6) dans la face extérieure de l'armature tubulaire externe (2).

4. Manchon selon la revendication 3, caractérisé en ce que les creux (15) sont répartis selon deux couronnes admettant pour axe l'axe de l'armature tubulaire externe (2) et longeant chacune l'un des deux profilés (8).

5. Manchon selon la revendication 3, caractérisé en ce que les creux constituent des rainures rectilignes (16) s'étendant, parallèlement à l'axe de l'armature tubulaire externe (2), de l'un des deux profilés (8) à l'autre.

FIG.1.

FIG.2.

FIG.3.

FIG.4.

FIG:5.

Office européen
des brevets

**RAPPORT DE RECHERCHE
EUROPEENNE**

Numéro de la demande

**EP 90 40 3287**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y,D,A,D | EP-A-0 248 714   (HUTCHINSON)<br>* figures 3, 4 *<br>– – – | 1,2-5 | F 16 F<br>13/00 |
| Y | DE-A-3 730 582   (OPEL)<br>* figure 1 *<br>– – – | 1 | |
| A | DE-A-3 831 284   (TOKAI)<br>* colonne 7, lignes 19 - 30; figures 1, 2 *<br>– – – | 1,2 | |
| A | EP-A-0 234 966   (PEUGEOT-CITROEN)<br>* colonne 2, lignes 57 - 61; figures 2-4 *<br>– – – – | 1 | |

|  | DOMAINES TECHNIQUES RECHERCHES (Int. Cl.5) |
|---|---|
|  | F 16 F<br>B 60 G |

Le présent rapport de recherche a été établi pour toutes les revendications

| Lieu de la recherche | Date d'achèvement de la recherche | Examinateur |
|---|---|---|
| La Haye | 11 février 91 | TORSIUS A. |